# EUROPEAN PATENT SPECIFICATION

(11) **EP 3 357 231 B1**
(45) Date of publication and mention of the grant of the patent: **23.03.2022**
(21) Application number: 16785007.2
(22) Date of filing: 27.09.2016
(51) Int. Cl.: H04N 5/232

(54) **METHOD AND SYSTEM FOR SMART IMAGING**
VERFAHREN UND SYSTEM FÜR INTELLIGENTE BILDGEBUNG
MÉTHODE ET SYSTÈME POUR IMAGERIE INTELLIGENTE

(30) Priority: 28.09.2015 US 201562234010 P; 22.09.2016 US 201615273427
(43) Date of publication of application: 08.08.2018
(73) Proprietor: Google LLC, Mountain View, CA 94043 (US)
(72) Inventor: LIM, Suk Hwan, Mountain View, California 94043 (US); WAN, Chung Chun, Mountain View, California 94043 (US); CHNG, Choon Ping, Mountain View, California 94043 (US); AGUERA-ARCAS, Blaise, Mountain View, California 94043 (US)
(74) Representative: Stott, James Edward
(86) International application number: PCT/US2016/053977
(87) International publication number: WO 2017/058800

(56) References cited:
- US-A1- 2003 025 800
- US-A1- 2003 025 800
- US-A1- 2003 174 772
- US-A1- 2003 174 772
- US-A1- 2006 203 101
- US-A1- 2006 203 101

## Description

### Background

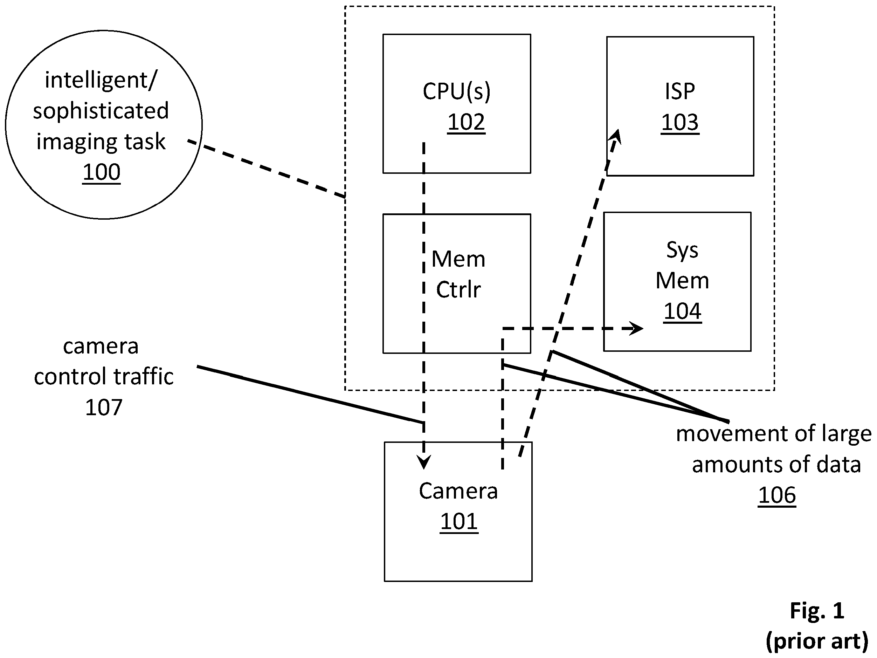

As observed in Fig. 1, intelligent and/or sophisticated image related tasks 100 have traditionally been performed entirely by a computing system's higher performance data processing components such as its general purpose processing core(s) 102 and/or its image signal processor (ISP) 103.

A problem with performing all such tasks 100 within these components 102, 103 is the amount of power consumed moving image data within the system. Specifically, entire images of data typically need to be forwarded 106 from the camera 101 to the ISP directly 103 or into system memory 104. The movement of such large quantities of data within the system consumes large amounts of power which, in the case of battery operated devices, can dramatically reduce the battery life of the device.

Compounding the inefficiency is that often times much of the image data is of little importance or value. For example, consider an imaging task that seeks to analyze a small area of the image. Here, although just a small area of the image is of interest to the processing task, the entire image will be forwarded through the system. The small region of interest is effectively parsed from the larger image only after the system has expended significant power moving large amounts of useless data outside the region.

Another example is the initial identification of a "looked for" feature within an image (e.g., the initial identification of the region of interest in the example discussed immediately above). Here, if the looked for feature is apt to be present in the imagery taken by the camera only infrequently, continuous streams of entire images without the feature will be forwarded through the system before the feature ultimately presents itself. As such, again, large amounts of data that are of no use or value are being moved through the system, which can dramatically reduce the power efficiency of the device.

Additionally all camera control decisions, such as whether to enter a camera into a particular mode, have traditionally been made by the general purpose processing core 102. As such highly adaptive camera control functions (e.g., in which a camera switches between various modes frequently) can generate heavy camera control traffic 107 that is directed through the system toward the camera 101. Such highly adaptive functions may even be infeasible because of the substantial delay that exists between the recognizing of an event that causes a camera to change modes and when any new command is ultimately received by the camera 101.

US patent application publication no. US2003/174772 describes imaging systems and methods for processing images. Various of the imaging systems include a motion detection and/or estimation engine. Various of the methods include processes for accepting motion information from a motion detection and/or estimation engine and performing one or more of the following functions: anti-shake, blur reduction, scene definition, video compression, and power management. In some cases, the various systems and methods can be implemented on a single chip.

US patent application publication no. US2006/203101 describes a motion detecting camera system which includes a portable motion detection device having an image sensor for detecting motion within a field of view of the motion detection device and automatically generating a digital image of a scene within the field of view upon detection of motion. The motion detection device includes a cellular telephone transmitter for transmitting cellular telephone communications. The camera system includes a base unit having a display screen. The motion detection device is configured to automatically transmit the digital image via the transmitter to the base unit for display on the display screen.

### Summary

In accordance with aspects of the invention there are provided a computer-implemented method and a computer system as recited in the accompanying claims. The invention is set out solely in the appended claims. In the present disclosure, embodiments according to the invention are solely the specific combinations of features as defined in the claims.

### List of Figures

The following description and accompanying drawings are used to illustrate embodiments of the invention. In the drawings:
Fig. 1 shows a prior art system having a camera;
Fig. 2 shows an improved system having an integrated camera solution;
Figs. 3a(i) and 3a(ii) show different mechanical designs of an integrated camera solution;
Fig. 3b shows a logical design for an integrated camera solution;
Fig. 4 shows a functional framework for an integrated camera solution;
Fig. 5 shows a first method performed by an integrated camera solution;
Fig. 6 shows a computing system.

### Description

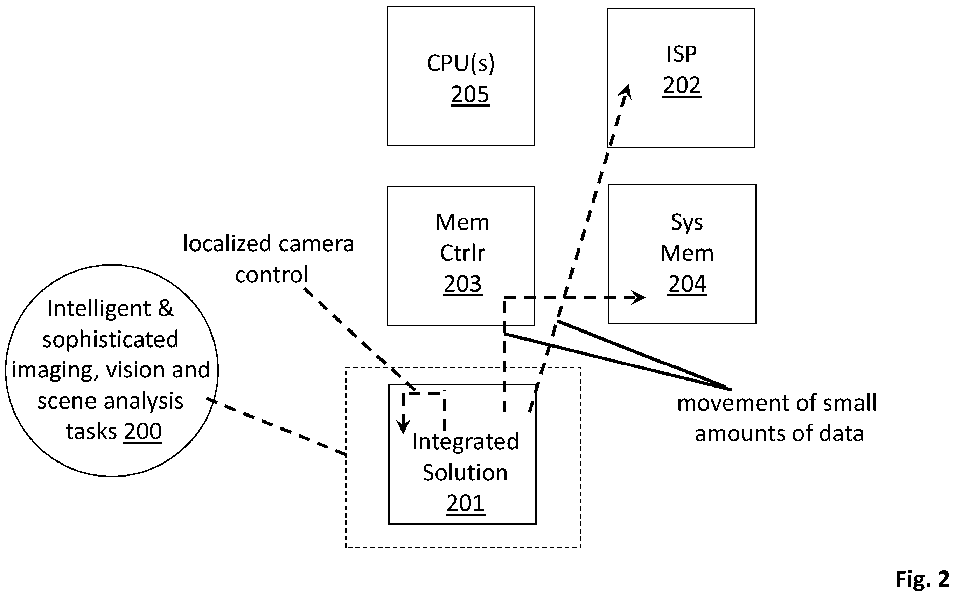

Fig. 2 depicts an improved system where a sensor, memory and processing hardware 201 (hereinafter, "integrated solution" or "integrated camera solution") that are mechanically integrated very closely to one another (e.g., by being stacked and/or abutted to one another), is able to perform various intelligent/sophisticated processing tasks 200 so as to improve the power efficiency of the device.

One such task is the ability to identify "looked-for" image features within the imagery being taken by the integrated solution 201. Another task is the ability to determine specific operating modes "on the fly" from analysis of imagery that has just been taken by the integrated solution 201. Each of these is discussed at length below.

The functionality of identifying looked for features with the integrated solution 201 may also be extended, at least in some cases, to perform any associated follow-on image processing tasks with the integrated solution 201. One particularly pertinent follow-on processing task may be compression. Here, once pertinent image information has been identified by the integrated solution 201, the information may be further compressed by the integrated solution 201 to reduce its total data size in preparation for its forwarding to other components within the system. Thus, not only may efficiencies be realized by eliminating information of no importance for forwarding, but also, reducing the size of the information that is pertinent and is forwarded.

Further still, different parts of a feature of interest may be compressed at different compression ratios (e.g., sections of the image that are more quality sensitive may be compressed at a lower compression ratio while other sections of the image that are less quality sensitive may be compressed at a higher compression ratio). Generally, images (e.g., entire frames or portions thereof) that are more sensitive to quality may be compressed with lower compression ratios while images (e.g., frames or portions thereof) that are less sensitive to quality may be compressed with greater compression ratios.

In yet other cases, all of the image processing intelligence for a particular function may be performed by the integrated solution 201. For instance, not only may a region of interest be identified by the integrated solution 201, but also, whatever analysis of the region of interest that is to take place once it has been identified is also performed by the integrated solution 201. In this case, little or no image information at all (important or otherwise) is forwarded through the system because the entire task has been performed by the integrated solution 201. In this respect, power reduction efficiency is practically ideal as compared to the prior art approaches described in the Background.

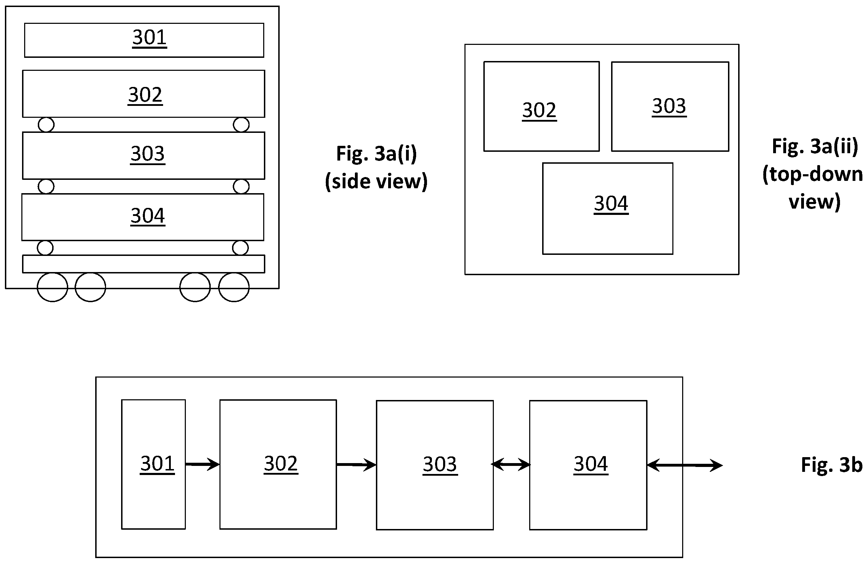

In order to identify looked for features within an image (or other extended image processing functions) with the integrated solution 201, some degree of processing intelligence/sophistication is integrated into the integrated solution 201. Figs. 3a(i), 3a(ii) and 3b show some possible embodiments where an imaging device has been enhanced with non traditional hardware and/or software components so that the device can perform intelligent/sophisticated image processing tasks consistent with the improvements discussed above.

Figs. 3a(i) and 3a(ii) show embodiments of possible mechanical designs for a solution having integrated processing intelligence. As observed in Fig. 3a(i), the integrated solution includes traditional camera optics and servo motors 301 (the later, e.g., for auto-focus functions) and an image sensor 302. The integrated solution also includes, however, integrated memory 303 and processing intelligence hardware 304.

As observed in Fig. 3a(i), the mechanical design is implemented with stacked semiconductor chips 302 - 304. Also as observed in Fig. 3a(i) the memory 303 and processing intelligence hardware 304 are within the same package having the camera optics and image sensor.

In other embodiments, such as observed in Fig. 3a(ii), the sensor 302, memory 303 and processing intelligence hardware 304 may be placed very close to one another, e.g., by being abutted next to one another (for simplicity Fig. 3a(ii) does not show the optics/motors 301 which may be positioned above any one or more of the sensor 302, memory 303 and processing intelligence hardware 304). Various combinations of stacking and abutment may also exist to provide for a compact mechanical design in which the various elements are placed in very close proximity to one another. In combination or alternatively, e.g., as an extreme form of abutment, various components may be integrated on a same semiconductor die (e.g., the image sensor and processing intelligence hardware may be integrated on a same die).

Fig. 3b shows a functional design for the integrated solution of Fig. 3a. As observed in Fig. 3b, the camera optics 301 process incident light that is received by the image sensor 302 which generates pixelated image data in response thereto. The image sensor forwards the pixelated image data into a memory 303. The image data is then processed by the processing intelligence hardware 304.

The processing intelligence hardware 304 can take on various different forms depending on implementation. At one extreme, the processing intelligence hardware 304 includes one or more processors and/or controllers that execute program code (e.g., that is also stored in memory 303 and/or in a non volatile memory, e.g., within the camera (not shown)). Here, software and/or firmware routines written to perform various complex tasks are stored in memory 303 and are executed by the processor/controller in order to perform the specific complex function.

At the other extreme, the processing intelligence hardware 304 is implemented with dedicated (e.g., custom) hardware logic circuitry such as application specific integrated specific (ASIC) custom hardware logic and/or programmable hardware logic (e.g., field programmable gate array (FPGA) logic, programmable logic device (PLD) logic and/or programmable logic array (PLA) logic).

In yet other implementations, some combination between these two extremes (processor(s) that execute program code vs. dedicated hardware logic circuitry) can be used to effectively implement the processing intelligence hardware component 304.

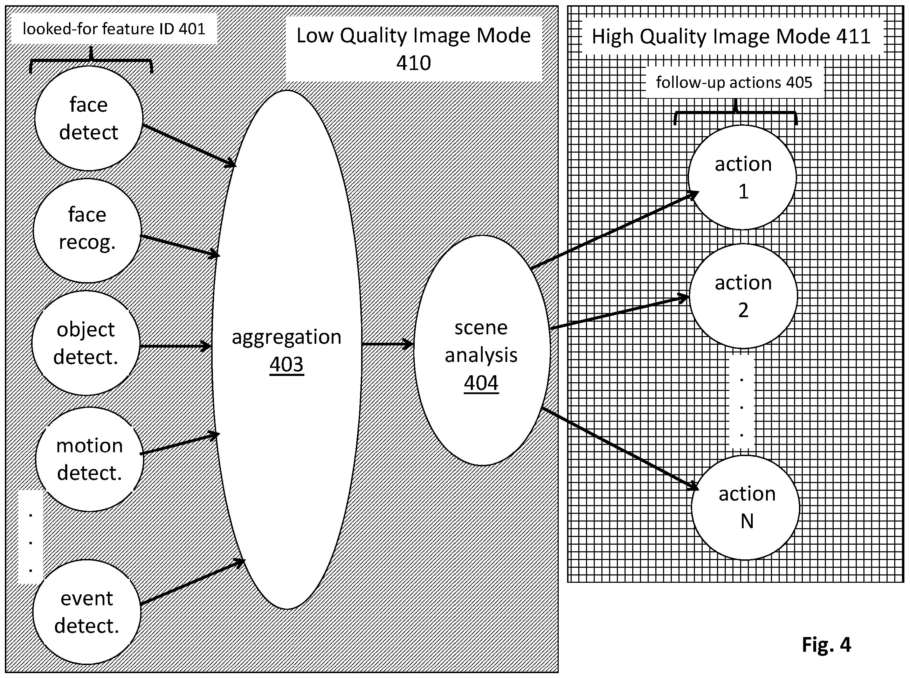

Fig. 4 shows a functional framework for various sophisticated tasks that may be performed by the processing intelligence hardware 304 as discussed just above.

As alluded to above, various looked-for features may be found by the integrated solution. The associated looked-for feature processes 401 may include, e.g., face detection (detecting the presence of any face), face recognition (detecting the presence of a specific face), facial expression recognition (detecting a particular facial expression), object detection or recognition (detecting the presence of a generic or specific object), motion detection or recognition (detecting a general or specific kind of motion), event detection or recognition (detecting a general or specific kind of event), image quality detection or recognition (detecting a general or specific level of image quality).

The looked for feature processes 401 may be performed, e.g., concurrently, serially, and/or may be dependent on various conditions (e.g., a facial recognition function may only be performed if specifically requested by a processing core and/or application and/or user).

As observed in Fig. 4, in various embodiments, the looked for feature processes 401 may be performed before a looked for feature has been found in a low quality image mode 410 to conserve power consumption. Here, a low quality image mode may be achieved with, e.g., any one or more of lower image resolution, lower image frame rate, and/or lower pixel bit depth. As such, the image sensor 302 may have associated setting controls to effect lower power vs. higher power operation.

Consider as an example a system that has been configured to identify various looked for features within a sequence of images being captured by the integrated solution, but where no such features have currently been found. In this mode, the integrated solution may continually take pictures of images to feed the looked for feature processes 401 with the expectation that a looked for feature may eventually present itself.

The taking of these pictures, however, is deliberately performed in a low picture quality mode to consume less power since there is also a likelihood that a number of images being captured may not contain any looked for feature. Since it does not make sense to consume significant power taking pictures of images whose content has no value, low quality mode is used prior to the discovery of a looked for feature to conserve power usage. Here, in many cases, various kinds of looked for features can be identified from a low quality image.

The outputs from the one or more of the looked-for feature processes 401 are provided to an aggregation layer 403 that combines outputs from various ones of the looked for feature processes 401 to enable a more comprehensive looked for scene (or "scene analysis") function 404. For instance, consider a system that is designed to start streaming video if two particular people are identified in an image. Here, a first of the looked for feature processes 401 will identify the first person and a second of the looked for feature processes will identify the second person.

The outputs of both processes are aggregated 403 to enable a scene analysis function 404 that will raise a flag if both looked for features are found (i.e., both people have been identified in the image). Here, various ones of the looked for feature processes can be aggregated 403 to enable one or more scene analysis configurations (e.g., a first scene analysis that looks for two particular people and a particular object within an image, a second scene analysis that looks for three specific people, etc.).

Upon the scene analysis function 404 recognizing that a looked for scene has been found, the scene analysis will "trigger" the start of one or more additional follow-up actions 405. For instance, recall the example above where the integrated solution is to begin streaming video if two people are identified in the images being analyzed. Here, the follow-up action corresponds to the streaming of the video.

In many cases, as indicated in Fig. 4, the follow-up action will include changing the quality mode of the images being taken from a low quality mode 410 to a high quality mode 411.

Here, recall that low quality mode 410 may be used to analyze images for looked for features before any looked for scenes are found because such images are apt to not contain looked for information, and therefore it does not make sense to consume large amounts of power taking such images. After a looked for scene has been found, however, the images being taken by the integrated solution are potentially important and therefore it is justifiable to consume more power to take later images at higher quality. Transitioning to a higher quality image mode may include, for instance, any one or more of increasing the frame rate, increasing the image resolution, and/or increasing the bit depth. In one embodiment, e.g., to conserve power in the high quality mode, the only pixel areas of the image sensor that are enabled during a capture mode are the pixel areas where a feature of interest is expected to impinge upon the surface area the image sensor. Again, the image sensor 302 is presumed to include various configuration settings to enable rapid transition of such parameters. Note that making the decision to transition the integrated solution between low quality and high quality image modes corresponds to localized, adaptive imaging control which is a significant improvement over prior art approaches

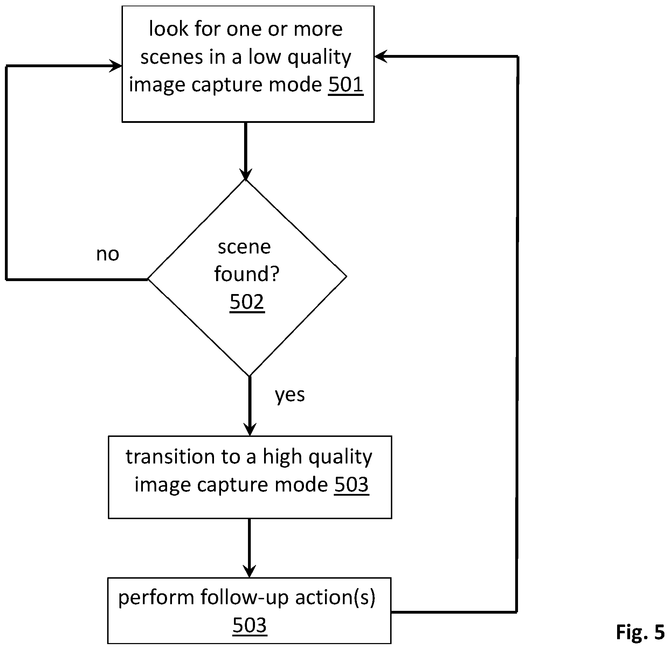

Fig. 5 therefore shows a general process in which images are taken by a camera in a low quality image capture mode while concurrently looking for one or more features that characterize a particular one or more scenes that the system has been configured to look for 501. So long as a looked for scene is not found 502, the system continues to capture images in low quality/low power mode 501. Once a looked for scene is recognized 502, however, the system transitions into a higher quality image capture mode 503 and takes some additional action(s) 504. Here, in various embodiments, the entire methodology of Fig. 5 can be performed by the integrated solution.

Some examples of the additional actions 504 that may take place in response to a particular scene being identified include any one or more the following: 1) identifying an area of interest within an image (e.g., the immediate area surrounding one or more looked for features within the image); 2) parsing an area of interest within an image and forwarding it to other (e.g., higher performance) processing components within the system; 3) discarding the area within an image that is not of interest; 4) compressing an image or portion of an image before it is forwarded to other components within the system; 5) taking a particular kind of image (e.g., a snapshot, a series of snapshots, a video stream); and, 6) changing one or more camera settings (e.g., changing the settings on the servo motors that are coupled to the optics to zoom-in, zoom-out or otherwise adjust the focusing/optics of the camera; changing an exposure setting; trigger a flash). Again, all of these actions can be taken under the control of the processing intelligence that exists at the camera-level.

Although embodiments above have stressed the entering of a high quality image capture mode after a looked for scene has been identified, various embodiments may not require such a transition and various one of the follow up actions 504 can take place while images are still being captured in a lower quality image capture mode.

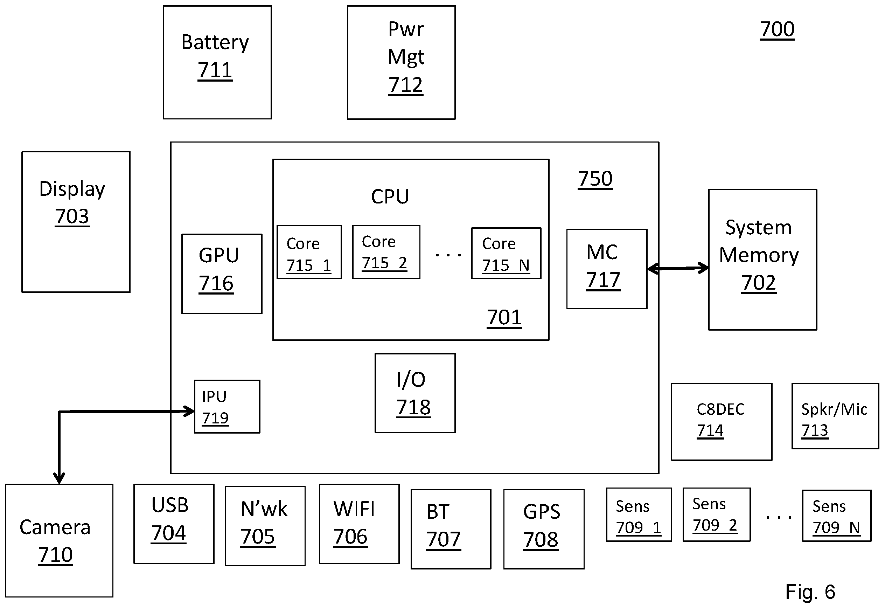

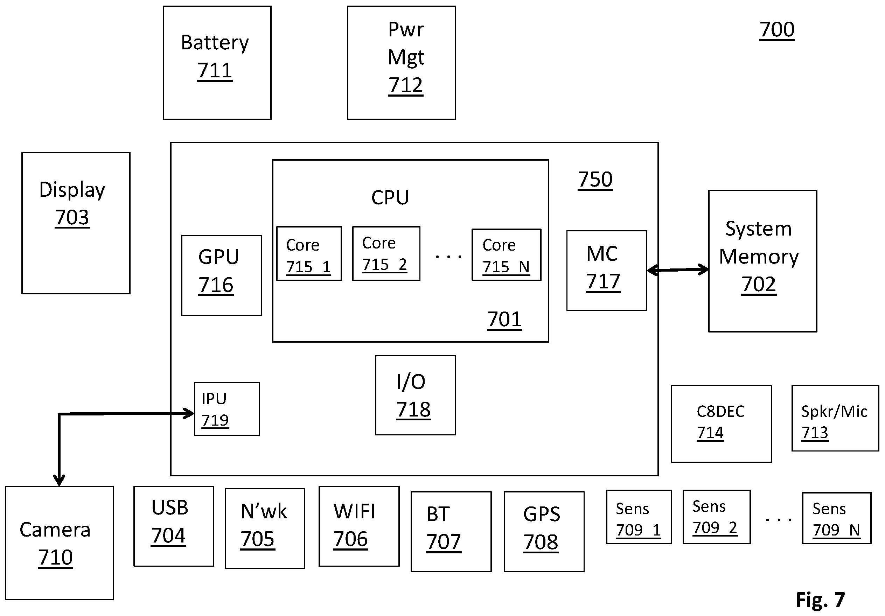

Fig. 6 provides an exemplary depiction of a computing system. Many of the components of the computing system described below are applicable to a computing system having an integrated camera and associated image processor (e.g., a handheld device such as a smartphone or tablet computer). Those of ordinary skill will be able to easily delineate between the two.

As observed in Fig. 6, the basic computing system may include a central processing unit 701 (which may include, e.g., a plurality of general purpose processing cores 715_1 through 715_N and a main memory controller 717 disposed on a multi-core processor or applications processor), system memory 702, a display 703 (e.g., touchscreen, flat-panel), a local wired point-to-point link (e.g., USB) interface 704, various network I/O functions 705 (such as an Ethernet interface and/or cellular modem subsystem), a wireless local area network (e.g., WiFi) interface 706, a wireless point-to-point link (e.g., Bluetooth) interface 707 and a Global Positioning System interface 708, various sensors 709_1 through 709_N, one or more cameras 710, a battery 711, a power management control unit 724, a speaker and microphone 713 and an audio coder/decoder 714.

An applications processor or multi-core processor 750 may include one or more general purpose processing cores 715 within its CPU 701, one or more graphical processing units 716, a memory management function 717 (e.g., a memory controller), an I/O control function 718 and an image processing unit 719. The general purpose processing cores 715 typically execute the operating system and application software of the computing system. The graphics processing units 716 typically execute graphics intensive functions to, e.g., generate graphics information that is presented on the display 703. The memory control function 717 interfaces with the system memory 702 to write/read data to/from system memory 702. The power management control unit 724 generally controls the power consumption of the system 700.

The camera 710 may be implemented as an integrated stacked and/or abutted sensor, memory and processing hardware solution as described at length above.

Each of the touchscreen display 703, the communication interfaces 704 - 707, the GPS interface 708, the sensors 709, the camera 710, and the speaker/microphone codec 713, 714 all can be viewed as various forms of I/O (input and/or output) relative to the overall computing system including, where appropriate, an integrated peripheral device as well (e.g., the one or more cameras 710). Depending on implementation, various ones of these I/O components may be integrated on the applications processor/multi-core processor 750 or may be located off the die or outside the package of the applications processor/multi-core processor 750.

In an embodiment one or more cameras 710 includes a depth camera capable of measuring depth between the camera and an object in its field of view. Application software, operating system software, device driver software and/or firmware executing on a general purpose CPU core (or other functional block having an instruction execution pipeline to execute program code) of an applications processor or other processor may perform any of the functions described above.

Embodiments of the invention may include various processes as set forth above. The processes may be embodied in machine-executable instructions. The instructions can be used to cause a general-purpose or special-purpose processor to perform certain processes. Alternatively, these processes may be performed by specific hardware components that contain hardwired logic for performing the processes, or by any combination of programmed computer components and custom hardware components.

Elements of the present invention may also be provided as a machine-readable medium for storing the machine-executable instructions. The machine-readable medium may include, but is not limited to, floppy diskettes, optical disks, CD-ROMs, and magneto-optical disks, FLASH memory, ROMs, RAMs, EPROMs, EEPROMs, magnetic or optical cards, propagation media or other type of media/machine-readable medium suitable for storing electronic instructions. For example, the present invention may be downloaded as a computer program which may be transferred from a remote computer (e.g., a server) to a requesting computer (e.g., a client) by way of data signals embodied in a carrier wave or other propagation medium via a communication link (e.g., a modem or network connection).

In the foregoing specification, the invention has been described with reference to specific exemplary embodiments thereof. It will, however, be evident that various modifications and changes may be made thereto without departing from the scope of the invention as set forth in the appended claims. The specification and drawings are, accordingly, to be regarded in an illustrative rather than a restrictive sense.

## Claims

1. A computer-implemented method comprising:
receiving, by an integrated camera solution (201, 710) of a computer system (700) that is operating in a low image quality mode and that includes (i) the integrated camera solution (201, 710), and (ii) a computer that includes one or more general purpose processing cores (CPU(s) 205) or image signal processors (ISP 202),
image data, wherein the integrated camera solution comprises memory, processing intelligence hardware, and an image sensor being stacked and/or abutted, and wherein the image data is received in response to incident light that is received by the image sensor;
determining, by the integrated camera solution of the computer system that is operating in a low image quality mode, that the image data includes a particular looked-for feature and, in response, transitioning the computer system to a high quality image mode to receive image data at a higher quality;
compressing, by the integrated camera solution (710) of the computer system that is operating in the high quality image mode, one part of a region of interest within the image data corresponding to the particular looked-for feature at a different compression ratio than another part of the region of interest; and
processing, by the computer of the computer system that is operating in the high quality image mode, the compressed image data forwarded by the integrated camera solution. (710).

2. The method of claim 1, wherein the determining that the image data includes the particular looked-for feature comprises determining that the image data includes two or more particular looked-for features.

3. The method of claim 1, wherein the determining that the image data includes the particular looked-for feature comprises performing face detection using the integrated camera solution.

4. The method of claim 1, wherein the determining that the image data includes the particular looked-for feature comprises performing face recognition using the integrated camera solution.

5. The method of claim 1, wherein the determining that the image data includes the particular looked-for feature comprises performing facial expression detection using the integrated camera solution.

6. The method of claim 1, wherein the determining that the image data includes the particular looked-for feature comprises performing object detection or recognition using the integrated camera solution.

7. The method of claim 1, wherein the determining that the image data includes the particular looked-for feature comprises performing motion detection or recognition using the integrated camera solution.

8. The method of claim 1, wherein the determining that the image data includes the particular looked-for feature comprises performing event detection or recognition using the integrated camera solution.

9. The method of claim 1, wherein the determining that the image data includes the particular looked-for feature comprises performing image quality detection or recognition using the integrated camera solution.

10. The method of claim 1, wherein transitioning the computer system to a high quality image mode comprises transitioning from a low frame rate mode to a high frame rate mode, or transitioning from a low image resolution mode to a high image resolution mode, or transitioning from a low bit depth mode to a high bit depth mode.

11. The method of claim 1, wherein determining that the image data includes a particular looked-for feature comprise combining outputs of multiple looked-for feature processes.

12. A computer system (700) that includes (i) an integrated camera solution (201, 710), and (ii) a computer that includes one or more general purpose processing cores (CPU(s) 205) or image signal processors (ISP 202),
wherein the integrated camera solution comprises memory, processing intelligence hardware, and an image sensor being stacked and/or abutted, the computer system comprising the computer and one or more storage devices storing instructions that are operable, when executed by the computer to cause the computer system (700) to perform operations comprising:
receiving, by the integrated camera solution and while the computer system is operating in a low image quality mode, image data wherein the image data is received in response to incident light that is received by the image sensor;
determining, by the integrated camera solution and while the computer system is operating in a low image quality mode, that the image data includes a particular looked-for feature and, in response, transitioning the computer system to a high quality image mode to receive image data at a higher quality;
compressing, by the integrated camera solution of the computer system that is operating in the high quality image mode, one part of a region of interest within the image data corresponding to the particular looked-for feature at a different compression ratio than another part of the region of interest; and
processing, by the computer and while the computer system is operating in the high quality image mode, the compressed image data forwarded by the integrated camera solution. (710).

13. A computer-readable storage device storing software comprising instructions executable by the computer system as recited in claim 12 which, upon such execution, cause the computer system as recited in claim 12 to perform steps of the method as recited in any one of claims 1 to 11.

## Patentansprüche

1. Computerimplementiertes Verfahren, umfassend:
Empfangen von Bilddaten durch eine integrierte Kameralösung (201, 710) eines Computersystems (700), das in einem Modus mit niedriger Bildqualität arbeitet und das einschließt: (i) die integrierte Kameralösung (201, 710) und (ii) einen Computer, der einen oder mehrere Allzweckverarbeitungskerne (CPU(s) 205) oder Bildsignalprozessoren (ISP 202) umfasst, worin die integrierte Kameralösung einen Speicher, eine Verarbeitungsintelligenz-Hardware und einen Bildsensor umfasst, die gestapelt und/oder anliegend angeordnet sind, und worin die Bilddaten als Antwort auf einfallendes Licht, das durch den Bildsensor empfangen wird, empfangen werden;
durch die integrierte Kameralösung des Computersystems, das in einem Modus mit niedriger Bildqualität arbeitet, erfolgendes Bestimmen, dass die Bilddaten ein bestimmtes gesuchtes Merkmal einschließen, und als Antwort darauf erfolgendes Übergehen des Computersystems in einen Modus mit hoher Bildqualität, um Bilddaten mit einer höheren Qualität zu empfangen;
durch die integrierte Kameralösung (710) des Computersystems, das im Modus mit hoher Bildqualität arbeitet, erfolgendes Komprimieren eines Teils eines Bereichs von Interesse innerhalb der Bilddaten, der dem bestimmten gesuchten Merkmal entspricht, mit einem anderen Komprimierungsverhältnis als bei einem anderen Teil des Bereichs von Interesse; und
Verarbeiten der komprimierten Bilddaten, die durch die integrierte Kameralösung weitergeleitet werden, durch den Computer des Computersystems, das im Modus mit hoher Bildqualität arbeitet (710).

2. Verfahren nach Anspruch 1, worin das Bestimmen, dass die Bilddaten das bestimmte gesuchte Merkmal einschließen, umfasst: Bestimmen, dass die Bilddaten zwei oder mehr bestimmte gesuchte Merkmale einschließen.

3. Verfahren nach Anspruch 1, worin das Bestimmen, dass die Bilddaten das bestimmte gesuchte Merkmal einschließen, das Durchführen einer Gesichtsermittlung unter Verwendung der integrierten Kameralösung umfasst.

4. Verfahren nach Anspruch 1, worin das Bestimmen, dass die Bilddaten das bestimmte gesuchte Merkmal einschließen, das Durchführen einer Gesichtserkennung unter Verwendung der integrierten Kameralösung umfasst.

5. Verfahren nach Anspruch 1, worin das Bestimmen, dass die Bilddaten das bestimmte gesuchte Merkmal einschließen, das Durchführen einer Gesichtsausdrucksermittlung unter Verwendung der integrierten Kameralösung umfasst.

6. Verfahren nach Anspruch 1, worin das Bestimmen, dass die Bilddaten das bestimmte gesuchte Merkmal einschließen, das Durchführen einer Objektermittlung oder -erkennung unter Verwendung der integrierten Kameralösung umfasst.

7. Verfahren nach Anspruch 1, worin das Bestimmen, dass die Bilddaten das bestimmte gesuchte Merkmal einschließen, das Durchführen einer Bewegungsermittlung oder -erkennung unter Verwendung der integrierten Kameralösung umfasst.

8. Verfahren nach Anspruch 1, worin das Bestimmen, dass die Bilddaten das bestimmte gesuchte Merkmal einschließen, das Durchführen einer Ereignisermittlung oder -erkennung unter Verwendung der integrierten Kameralösung umfasst.

9. Verfahren nach Anspruch 1, worin das Bestimmen, dass die Bilddaten das bestimmte gesuchte Merkmal einschließen, das Durchführen einer Bildqualitätsermittlung oder -erkennung unter Verwendung der integrierten Kameralösung umfasst.

10. Verfahren nach Anspruch 1, worin das Übergehen des Computersystems in einen Modus mit hoher Bildqualität umfasst:
Übergehen von einem Modus mit niedriger Bildrate in einen Modus mit hoher Bildrate, oder
Übergehen von einem Modus mit niedriger Bildauflösung in einen Modus mit hoher Bildauflösung, oder
Übergehen von einem Modus mit niedriger Bittiefe in einen Modus mit hoher Bittiefe.

11. Verfahren nach Anspruch 1, worin das Bestimmen, dass die Bilddaten ein bestimmtes gesuchtes Merkmal enthalten, das Kombinieren von Ausgaben mehrerer Prozesse für gesuchte Merkmale umfasst.

12. Computersystem (700), einschließend: (i) eine integrierte Kameralösung (201, 710) und (ii) einen Computer, der einen oder mehrere Allzweckverarbeitungskerne (CPU(s) 205) oder Bildsignalprozessoren (ISP 202) einschließt, worin die integrierte Kameralösung einen Speicher, eine Verarbeitungsintelligenz-Hardware und einen Bildsensor umfasst, die gestapelt und/oder anliegend angeordnet sind, wobei das Computersystem den Computer und eine oder mehrere Speichervorrichtungen umfasst, die Anweisungen speichern, die betreibbar sind, wenn sie durch den Computer ausgeführt werden, das Computersystem (700) zu veranlassen, Operationen durchzuführen, die Folgendes umfassen:
Empfangen von Bilddaten durch die integrierte Kameralösung und während das Computersystem in einem Modus mit niedriger Bildqualität arbeitet, worin die Bilddaten als Antwort auf einfallendes Licht, das durch den Bildsensor empfangen wird, empfangen werden;
durch die integrierte Kameralösung und während das Computersystem in einem Modus mit niedriger Bildqualität arbeitet, erfolgendes Bestimmen, dass die Bilddaten ein bestimmtes gesuchtes Merkmal einschließen, und als Antwort darauf erfolgendes Übergehen des Computersystems in einen Modus mit hoher Bildqualität, um Bilddaten mit einer höheren Qualität zu empfangen;
durch die integrierte Kameralösung des Computersystems, das im Modus mit hoher Bildqualität arbeitet, erfolgendes Komprimieren eines Teils eines Bereichs von Interesse innerhalb der Bilddaten, der dem bestimmten gesuchten Merkmal entspricht, mit einem anderen Komprimierungsverhältnis als bei einem anderen Teil des Bereichs von Interesse; und
Verarbeiten der komprimierten Bilddaten, die durch die integrierte Kameralösung (710) weitergeleitet werden, durch den Computer und während das Computersystem im Modus mit hoher Bildqualität arbeitet.

13. Computerlesbare Speichervorrichtung, die eine Software speichert, welche Anweisungen umfasst, die durch das Computersystem nach Anspruch 12 ausführbar sind, die bei einer solchen Ausführung das Computersystem nach Anspruch 12 veranlassen, Schritte des Verfahrens nach einem der Ansprüche 1 bis 11 durchzuführen.

## Revendications

1. Procédé mis en œuvre par ordinateur comprenant :
la réception, par une solution de caméra intégrée (201, 710) d'un système informatique (700) fonctionnant dans un mode à qualité d'image faible et qui inclut (i) la solution de caméra intégrée (201, 710) et (ii) un ordinateur qui inclut un ou plusieurs cœurs de traitement à usage général (CPU 205) ou un ou plusieurs processeurs de signal d'image (ISP 202), de données d'image, dans lequel la solution de caméra intégrée comprend une mémoire, un composant matériel intelligent de traitement et un capteur d'image qui sont empilés et/ou mis bout à bout, et dans lequel les données d'image sont reçues en réponse à une lumière incidente qui est reçue par le capteur d'image ;
la détermination, par la solution de caméra intégrée du système informatique fonctionnant dans un mode à qualité d'image faible, du fait que les données d'image incluent une caractéristique recherchée particulière et, en réponse, la transition du système informatique sur un mode à qualité d'image élevée pour recevoir les données d'image dans une qualité plus élevée ;
la compression, par la solution de caméra intégrée (710) du système informatique fonctionnant dans le mode à qualité d'image élevée, d'une partie d'une région d'intérêt à l'intérieur des données d'image qui correspond à la caractéristique recherchée particulière à un taux de compression qui est différent de celui d'une autre partie de la région d'intérêt ; et
le traitement, par l'ordinateur du système informatique fonctionnant dans le mode à qualité d'image élevée, des données d'image comprimées qui sont transmises par la solution de caméra intégrée (710).

2. Procédé selon la revendication 1, dans lequel la détermination du fait que les données d'image incluent la caractéristique recherchée particulière comprend la détermination du fait que les données d'image incluent deux caractéristiques recherchées particulières ou plus.

3. Procédé selon la revendication 1, dans lequel la détermination du fait que les données d'image incluent la caractéristique recherchée particulière comprend la réalisation d'une détection de visage en utilisant la solution de caméra intégrée.

4. Procédé selon la revendication 1, dans lequel la détermination du fait que les données d'image incluent la caractéristique recherchée particulière comprend la réalisation d'une reconnaissance de visage en utilisant la solution de caméra intégrée.

5. Procédé selon la revendication 1, dans lequel la détermination du fait que les données d'image incluent la caractéristique recherchée particulière comprend la réalisation d'une détection d'expression faciale en utilisant la solution de caméra intégrée.

6. Procédé selon la revendication 1, dans lequel la détermination du fait que les données d'image incluent la caractéristique recherchée particulière comprend la réalisation d'une détection ou reconnaissance d'objet en utilisant la solution de caméra intégrée.

7. Procédé selon la revendication 1, dans lequel la détermination du fait que les données d'image incluent la caractéristique recherchée particulière comprend la réalisation d'une détection ou reconnaissance de mouvement en utilisant la solution de caméra intégrée.

8. Procédé selon la revendication 1, dans lequel la détermination du fait que les données d'image incluent la caractéristique recherchée particulière comprend la réalisation d'une détection ou reconnaissance d'événement en utilisant la solution de caméra intégrée.

9. Procédé selon la revendication 1, dans lequel la détermination du fait que les données d'image incluent la caractéristique recherchée particulière comprend la réalisation d'une détection ou reconnaissance de qualité d'image en utilisant la solution de caméra intégrée.

10. Procédé selon la revendication 1, dans lequel la transition du système informatique sur un mode à qualité d'image élevée comprend
la transition depuis un mode à débit de photogrammes faible sur un mode à débit de photogrammes élevé,
ou la transition depuis un mode à résolution d'image faible sur un mode à résolution d'image élevée, ou
,la transition depuis un mode à résolution binaire faible sur un mode à résolution binaire élevée.

11. Procédé selon la revendication 1, dans lequel la détermination du fait que les données d'image incluent une caractéristique recherchée particulière comprend la combinaison de sorties de multiples processus de caractéristiques recherchées.

12. Système informatique (700) qui inclut (i) une solution de caméra intégrée (201, 710) et (ii) un ordinateur qui inclut un ou plusieurs cœurs de traitement à usage général (CPU 205) ou un ou plusieurs processeurs de signal d'image (ISP 202), dans lequel la solution de caméra intégrée comprend une mémoire, un composant matériel intelligent de traitement et un capteur d'image qui sont empilés et/ou mis bout à bout, le système informatique comprenant l'ordinateur et un ou plusieurs dispositifs de stockage qui stockent des instructions qui peuvent être rendues opérationnelles, lorsqu'elles sont exécutées par l'ordinateur, pour amener le système informatique (700) à réaliser les opérations comprenant :
la réception, par la solution de caméra intégrée et tandis que le système informatique fonctionne dans un mode à qualité d'image faible, de données d'image, dans lequel les données d'image sont reçues en réponse à une lumière incidente qui est reçue par le capteur d'image ;
la détermination, par la solution de caméra intégrée et tandis que le système informatique fonctionne dans un mode à qualité d'image faible, du fait que les données d'image incluent une caractéristique recherchée particulière et, en réponse, la transition du système informatique sur un mode à qualité d'image élevée pour recevoir les données d'image dans une qualité plus élevée ;
la compression, par la solution de caméra intégrée du système informatique qui fonctionne dans le mode à qualité d'image élevée, d'une partie d'une région d'intérêt à l'intérieur des données d'image qui correspond à la caractéristique recherchée particulière à un taux de compression qui est différent de celui d'une autre partie de la région d'intérêt ; et
le traitement, par l'ordinateur du système informatique et tandis que le système informatique fonctionne dans le mode à qualité d'image élevée, des données d'image comprimées qui sont transmises par la solution de caméra intégrée (710).

13. Dispositif de stockage pouvant être lu par ordinateur et stockant un logiciel qui comprend des instructions qui peuvent être exécutées par le système informatique selon la revendication 12, lesquelles instructions, lors de ladite exécution, ont pour effet que le système informatique selon la revendication 12 réalise les étapes du procédé selon l'une quelconque des revendications 1 à 11.
